# FASCICULE DE BREVET EUROPEEN

(11) **EP 2 734 921 B1**
(45) Date de publication et mention de la délivrance du brevet: **01.09.2021**
(21) Numéro de dépôt: 12743505.5
(22) Date de dépôt: 12.07.2012
(51) Int. Cl.: G06F 9/4401, G06F 11/30, G06F 9/54, G06F 11/07

(54) **PROCEDE, PROGRAMME D'ORDINATEUR ET DISPOSITIF D'AIDE AU DEPLOIEMENT DE CLUSTERS**
VERFAHREN, COMPUTERPROGRAMM UND VORRICHTUNG ZUR UNTERSTÜTZUNG DER BEREITSTELLUNG VON CLUSTERN
METHOD, COMPUTER PROGRAM AND DEVICE FOR AIDING THE DEPLOYMENT OF CLUSTERS

(30) Priorité: 18.07.2011 FR 1156517
(43) Date de publication de la demande: 28.05.2014
(73) Titulaire: Bull S.A.S., 78340 Les Clayes-sous-Bois (FR)
(72) Inventeur: FLACARD, Emmanuel, F-38260 Ornacieux (FR); ICETA, Thierry, F-38100 Grenoble (FR); GEORGES, Julien, 91290 Arpajon (FR)
(74) Mandataire: Argyma
(86) Numéro de dépôt international: PCT/FR2012/051654
(87) Numéro de publication internationale: WO 2013/011229

(56) Documents cités:
- US-A1- 2005 182 582
- US-A1- 2008 320 326
- US-A1- 2009 300 166
- None

## Description

La présente invention concerne l'installation de clusters et plus particulièrement un procédé, un programme d'ordinateur et un dispositif d'aide au déploiement de clusters selon lequel, en particulier, des données d'exécution de démarrage sont analysées pour détecter et identifier, le cas échéant, des anomalies.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters. Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est, par exemple, réalisée à l'aide de liens de communication Ethernet et de réseaux d'interconnexions (par exemple Infiniband) (Ethernet et Infiniband sont des marques).

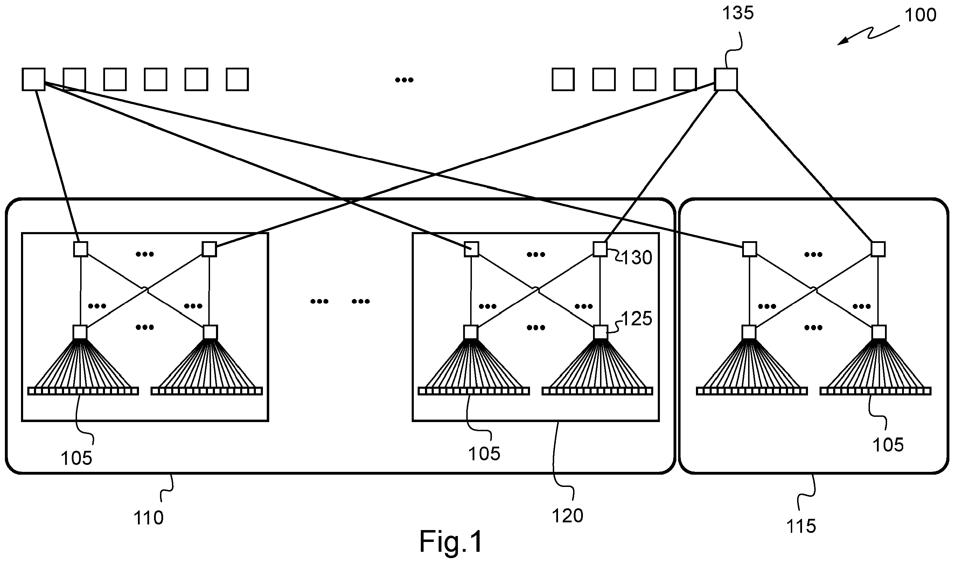

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

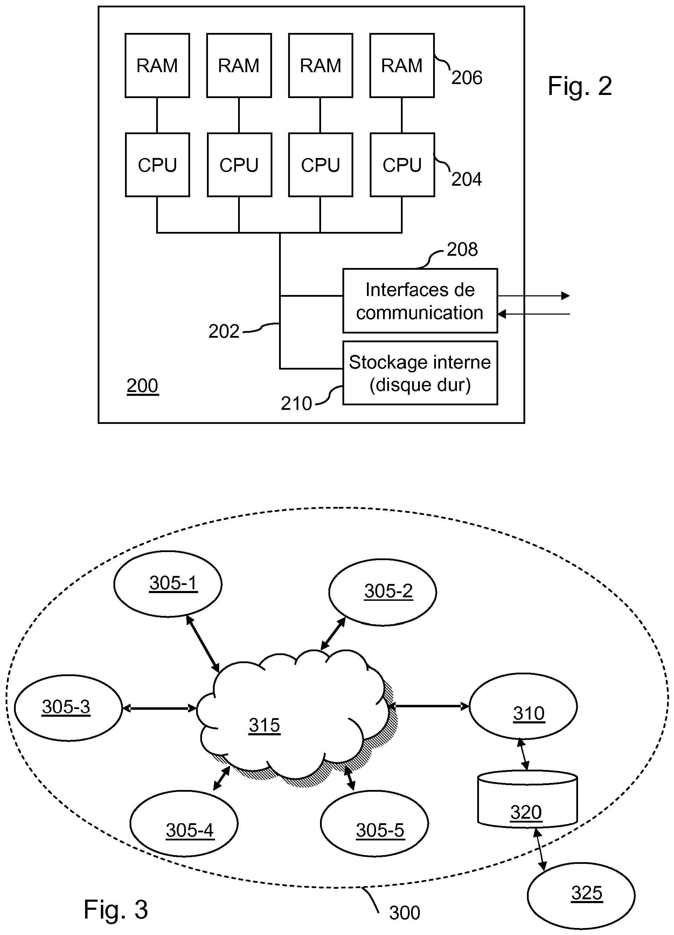

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 210, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Le nombre de composants mis en oeuvre dans un cluster, notamment d'équipements tels que des noeuds et des commutateurs, varie d'un cluster à un autre. Il peut être relativement faible, par exemple quelques dizaines de nœuds, ou très important, par exemple quelques milliers voire dizaines de milliers de noeuds. En outre, les composants mis en œuvre, d'un même type, peuvent être différents. Ainsi, par exemple, certains nœuds utilisés sont des nœuds comprenant une seule unité de calcul alors que d'autres nœuds en comprennent plusieurs. De même, la taille des mémoires et les versions logicielles ne sont pas nécessairement les mêmes pour chaque nœud.

Ainsi, la complexité croissante des composants des clusters et l'évolution de la taille de ces derniers exigent des moyens de configuration, d'administration et de gestion de plus en plus performants.

En particulier, une opération essentielle concerne l'installation d'une ou de plusieurs images logicielles, typiquement une image logicielle d'un système d'exploitation et des composants logiciels associés, sur au moins un nœud du cluster et le déploiement de cette ou de ces images sur d'autres nœuds. Cette opération est notamment rendue délicate par sa complexité et les nombreux mécanismes matériels et/ou logiciels mis en œuvre. Il convient donc de s'assurer qu'une telle opération s'est correctement effectuée ou, le cas échéant, d'être en mesure de comprendre pourquoi elle s'est mal effectuée afin d'y remédier.

Il est impossible, pour un opérateur, d'analyser les raisons pour lesquelles le déploiement d'images logicielles, par exemple une image d'un système d'exploitation tel que Linux (Linux est une marque), sur de nombreuses machines d'un cluster n'a pas pu aboutir pour des machines visées par cette opération. Les causes sont très nombreuses. En effet, les machines ciblées peuvent être, d'un point de vue matériel, de différents types et architectures (cluster hétérogène). En outre, de nombreux composants logiciels sont utilisés lors d'un déploiement, rendant difficile d'interprétation des données d'exécution de ce dernier.

L'invention permet de résoudre au moins un des problèmes exposés précédemment.

Concernant l'état de la technique, le document US 2008/320326 A1 divulgue la détection d'événements dans un système informatique, sur la base de motifs ("patterns") comprenant des tâches qui vérifient la présence de certaines conditions.

Le document US 2005/182582 A1 divulgue la surveillance d'un système informatique avec un système expert.

Le document US 2009/300166 A1 divulgue l'analyse de performance d'un système en utilisant des motifs ("patterns") d'événements.

L'invention a ainsi pour objet un procédé pour ordinateur d'aide au déploiement de clusters dans un cluster comprenant une pluralité de nœuds, au moins un nœud de la pluralité de nœuds comprenant des moyens pour générer des données d'exécution de démarrage dudit au moins un nœud, ce procédé comprenant les étapes suivantes,
- obtention de données d'exécution de démarrage dudit au moins un nœud ;
- obtention d'une définition d'au moins une séquence d'événements, ladite séquence d'événements comprenant au moins un événement et caractérisant un état donné d'au moins une partie dudit cluster ;
- obtention d'au moins une définition dudit au moins un événement de ladite au moins une séquence d'événements, ladite au moins une définition dudit au moins un événement caractérisant ledit au moins un événement de ladite au moins une séquence d'événements pour ledit au moins un nœud ;
- analyse desdites données obtenues d'exécution de démarrage dudit au moins un nœud selon ladite au moins une définition dudit au moins un événement de ladite au moins une séquence d'événements ; et,
- transmission d'au moins une information relative à ladite au moins une séquence d'événements si lesdites données obtenues d'exécution de démarrage dudit au moins un nœud comprennent des données correspondant à ladite au moins une définition dudit au moins un événement de ladite au moins une séquence d'événements;
- le procédé étant caractérisé en ce que plusieurs définitions distinctes d'un même événement sont obtenues pour rechercher un même événement dans des données d'exécution de démarrage d'au moins deux noeuds de type différent.

Le procédé selon l'invention permet ainsi de rechercher simultanément un même événement dans des équipements de type ou de configuration différent.

Le procédé selon l'invention permet ainsi de chercher des séquences d'événements dans un cluster hétérogène pour déterminer un état de ce dernier. Les informations obtenues permettent la génération de synthèses pouvant regrouper au sein d'une même vue des analyses concernant des nœuds de modèle et de configuration différents. Ceci est notamment rendu possible par la définition d'événements polymorphes (changeant de forme en fonction du nœud dans lequel ils apparaissent).

Selon un mode de réalisation particulier, le procédé comprend en outre une étape d'identification et de lancement d'une action associée à un événement de ladite au moins une séquence d'événements, ladite action étant lancée en réponse à une étape d'analyse desdites données obtenues d'exécution de démarrage dudit au moins un nœud selon au moins une définition dudit événement auquel est associé ladite action, ledit événement auquel est associé ladite action étant défini pour au moins ledit au moins un nœud.

Le procédé selon l'invention permet ainsi de mener automatiquement et uniquement en cas de besoin des investigations particulières pour qualifier un problème.

De façon avantageuse, ladite au moins une définition dudit au moins un événement de ladite au moins une séquence d'événements caractérisant ledit au moins un événement de ladite au moins une séquence d'événements pour ledit au moins un nœud comprend une variable. La définition d'événements polymorphes (changeant de forme en fonction de l'équipement dans lequel ils apparaissent) et spécialisables (pouvant contenir des variables dépendantes de chaque équipement visé) permet de chercher de nombreux types de séquences d'événements dans un cluster hétérogène.

Toujours selon un mode de réalisation particulier, le procédé comprend en outre une étape de détermination d'un état associé à ladite au moins une séquence d'événements, ladite au moins une information transmise relative à ladite au moins une séquence d'événements comprenant ledit état. Le procédé selon l'invention permet ainsi de déterminer rapidement un état connu d'un cluster ou d'une partie d'un cluster en fonction d'une séquence d'événements identifiée.

Toujours selon un mode de réalisation particulier, ladite au moins une séquence d'événements comprend une pluralité de séquences partielles d'événements, des événements d'au moins une séquence partielle d'événements, appelée seconde séquence partielle d'événements, étant recherchés si des événements d'au moins une première séquence partielle ont été identifiés dans lesdites données d'exécution. L'utilisation de séquences partielles (conditionnelles) permet de limiter la recherche d'événements dans des données d'exécution.

Le procédé comprend en outre, de préférence, une étape de détermination d'au moins une caractéristique d'au moins un événement de ladite au moins une séquence d'événements, ladite au moins une caractéristique étant une condition d'identification de l'événement auquel elle se rapporte. Il est ainsi possible d'affiner la recherche d'événements selon des critères particuliers, notamment des critères temporels et/ou d'ordre, liés à au moins un événement distinct de l'événement auquel ladite au moins une caractéristique se rapporte.

Lesdites données obtenues d'exécution de démarrage dudit au moins un nœud peuvent être obtenues directement auprès dudit au moins un nœud ou auprès de moyens de stockage indépendants dudit au moins un nœud.

Une définition d'un événement consiste par exemple en un motif formé d'une suite de symboles.

Selon un mode de réalisation particulier, ladite étape de transmission d'au moins une information relative à ladite au moins une séquence d'événements comprend une étape d'affichage d'au moins une partie de ladite au moins une séquence d'événements.

Toujours selon un mode de réalisation particulier, le procédé comprend en outre une étape de sélection de données d'exécution parmi lesdites données obtenues d'exécution de démarrage dudit au moins un nœud, ladite étape d'analyse étant effectuée sur lesdites données d'exécution sélectionnées. Le procédé selon l'invention permet ainsi de cibler la recherche d'événements pour des équipements particuliers.

L'invention a également pour objet un programme d'ordinateur comprenant des instructions adaptées à la mise en œuvre de chacune des étapes du procédé décrit précédemment lorsque ledit programme est exécuté sur un ordinateur ainsi qu'un dispositif comprenant des moyens adaptés à la mise en œuvre de chacune des étapes du procédé décrit précédemment. Les avantages procurés par ce programme d'ordinateur et ce dispositif sont similaires à ceux évoqués précédemment.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un nœud d'un cluster ;
- la figure 3 illustre schématiquement un cluster dans lequel un déploiement peut être effectué conformément à l'invention ;
- la figure 4 illustre schématiquement certaines étapes d'un algorithme pour analyser des données d'exécution relatives au démarrage de nœuds d'un cluster ;
- la figure 5 illustre schématiquement un principe d'analyse de données d'exécution selon l'invention ; et,
- la figure 6 représente schématiquement un exemple d'une séquence d'événements comprenant plusieurs séquences partielles d'événements ainsi que des commandes d'actions.

De façon générale, l'invention vise un outil d'analyse de données d'exécution de démarrage relatives au déploiement d'images logicielles, permettant la détection de motifs prédéterminés (ou *patterns* en terminologie anglo-saxonne) caractérisant des événements et l'identification de séquences d'événements détectés. De telles séquences peuvent être représentatives d'anomalies ou, au contraire, d'un déroulement attendu et considéré comme normal.

Selon un mode réalisation particulier, un intervalle de temps des données d'exécution à analyser est spécifié.

Les données analysées sont avantageusement issues de tous les nœuds d'un cluster dans lequel un déploiement d'un système d'exploitation tel que Linux est effectué. Les données peuvent être analysées au fur et à mesure de leur réception par un système central ou a postériori. Une telle analyse permet d'identifier un problème matériel ou logiciel qui serait survenu durant un déploiement et, par conséquent, d'y remédier.

Il est tout d'abord rappelé ici qu'un nœud d'un cluster, dépourvu d'un système d'exploitation, n'est généralement pas accessible à distance par un système tiers, par exemple par un nœud d'administration, et qu'ainsi, il ne peut être interrogé pour permettre l'identification d'une anomalie. Dans la suite de la description, il est considéré qu'un nœud est la plus petite unité de calcul visible depuis un système d'administration.

Cependant, un tel nœud de cluster, dépourvu de système d'exploitation, transmet des données d'exécution de démarrage au cours des différentes phases de son démarrage selon un mécanisme standard de console. Typiquement, des données d'exécution de démarrage sont émises lorsqu'il est mis sous tension, c'est-à-dire avant le démarrage (aussi appelé *boot* en terminologie anglo-saxonne), durant le démarrage et après le démarrage. Ces données sont en général reçues par un ou plusieurs nœuds d'administration et mémorisées sous forme de fichiers de données d'exécution (aussi appelés *log* en terminologie anglo-saxonne). En général, un fichier particulier est utilisé pour stocker toutes les données d'exécution provenant d'un nœud particulier.

De telles données d'exécution de démarrage sont ainsi relatives à des composants matériels et à des composants logiciels des nœuds visés.

La figure 3 illustre schématiquement un cluster dans lequel un déploiement peut être effectué conformément à l'invention.

Comme illustré, le cluster 300 comprend un ensemble d'équipements, ici les nœuds de calcul 305-1 à 305-5 et le nœud d'administration 310, connectés les uns aux autres via le réseau de communication 315 (comprenant ici des liens et des commutateurs, non représentés). Le nœud d'administration est relié à des moyens de stockage 320, locaux ou distants, par exemple une base de données d'un serveur de stockage.

Lors du démarrage des nœuds 305-1 à 305-5, des données d'exécution de démarrage sont transmises au nœud d'administration 310 qui les mémorise dans les moyens de stockage 320. Ces données sont analysées lors de leur réception ou ultérieurement après avoir été obtenues des moyens de stockage 320. Une telle analyse peut être effectuée au sein d'un processus mis en œuvre au moins partiellement dans un équipement du cluster 300, par exemple dans le nœud d'administration 310, et/ou au moins partiellement dans un équipement extérieur au cluster 300, par exemple dans l'équipement 325 pouvant accéder aux moyens de stockage 320. L'équipement 325 est typiquement un ordinateur ou une station de travail dont l'architecture peut être similaire à celle décrite précédemment en référence à la figure 2.

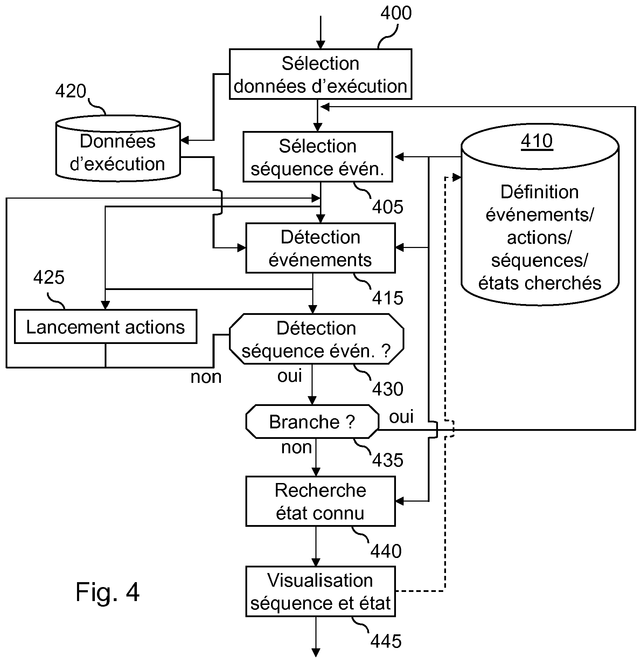

La figure 4 illustre schématiquement certaines étapes d'un algorithme pour analyser des données d'exécution relatives au démarrage de nœuds d'un cluster.

Une première étape (étape 400) a ici pour objet de sélectionner les données d'exécution devant être analysées. Une telle sélection peut être effectuée par la saisie ou l'obtention d'un ou de plusieurs critères parmi lesquels un intervalle de temps, pouvant notamment être défini par une date de début et une date de fin ou par une durée maximum s'étant écoulée depuis des événements recherchés, et des identifiants ou des types d'équipements. Une date est ici typiquement exprimée sous forme de jour et d'heure selon un format standard tel que jour/mois/année/heure/minutes, une durée pouvant être exprimée en heures.

Si aucun critère de sélection n'est utilisé, toutes les données d'exécution sont, de préférence, par défaut, sélectionnées pour être analysées.

Dans une étape suivante, une séquence d'événements est sélectionnée pour être recherchée. Cette séquence peut être définie par un utilisateur ou sélectionnée parmi un ensemble de séquences prédéterminées mémorisées, par exemple, dans une base de données 410.

Un exemple d'une telle séquence est donné en annexe (Définition d'une séquence). Comme décrit ci-après, la séquence sélectionnée peut être une séquence partielle, c'est-à-dire une sous-séquence possible parmi plusieurs sous-séquences ou une sous-séquence menant à ou résultant d'une telle sous-séquence. L'utilisation de séquences partielles permet de limiter la recherche de données représentatives d'événements dans des données d'exécution analysées.

Les événements de la séquence d'événements sélectionnée sont alors recherchés (étape 415) dans les données d'exécution sélectionnées référencées ici 420. La détection d'événements consiste par exemple à comparer une suite de symboles de données d'exécution avec un ou plusieurs motifs formés de suites de symboles prédéterminées représentatives des événements recherchés. De telles suites de symboles prédéterminées représentatives des événements recherchés sont, par exemple, mémorisées dans la base de données 410. Les symboles sont typiquement des caractères formant un motif (*pattern*).

Un exemple d'événements est donné en annexe (Définition d'événements polymorphes) et décrit ci-après.

Parallèlement à la détection d'événements, des actions peuvent être exécutées (étape 425). Ces actions sont ici identifiées dans la séquence d'événements recherchée. Elles peuvent viser, par exemple, la vérification de la valeur d'une variable, notamment une adresse d'un nœud, la vérification d'un événement particulier pour contrôler que ce dernier a bien eu lieu, par exemple vérifier qu'une requête DHCP (sigle de *Dynamic Host Configuration Protocol* en terminologie anglo-saxonne) a bien été reçue par un serveur en cas d'échec d'accès à un serveur DHCP, ou la vérification d'événements dans le temps pour contrôler que ces derniers ont bien eu lieu dans un intervalle de temps prédéterminé.

La mise en œuvre de telles actions permet de mener automatiquement et uniquement en cas de besoin des investigations particulières pour qualifier un problème. Comme représenté, leur exécution peut être soumise à la détection d'événements particuliers ou à la non détection d'événements particuliers attendus.

Un exemple d'actions est donné en annexe (Définition d'actions) et décrit ci-après.

Après avoir détecté un ou plusieurs événements, un test est effectué pour déterminer si la séquence d'événements recherchée est trouvée ou, le cas échéant, lorsque certains événements de la séquence ne sont pas considérés comme nécessaires, partiellement trouvée (étape 430). Dans la négative, l'étape précédente de détection d'événements est répétée.

Si la séquence d'événements recherchée est trouvée, un test est effectué (étape 435) pour déterminer si la séquence d'événements identifiée est une séquence partielle d'une séquence d'événements comprenant d'autres séquences partielles dont la recherche est conditionnée par la détection de la séquence d'événements identifiée et/ou par la valeur de paramètres de la séquence d'événements identifiée. Alternativement ou de façon complémentaire, la recherche d'une ou plusieurs séquences partielles d'événements peut être déclenchée par la détection d'un événement particulier de la séquence d'événements recherchée.

Dans l'affirmative, les étapes précédentes (étapes 405 à 430) sont répétées pour sélectionner et détecter la séquence partielle dont la recherche est conditionnée par la détection de la séquence d'événements identifiée et/ou par la valeur de paramètres de la séquence d'événements identifiée.

Si, au contraire, la séquence d'événements identifiée n'est pas une séquence partielle d'une séquence d'événements comprenant d'autres séquences partielles dont la recherche est conditionnée par la détection de la séquence d'événements identifiée et/ou par la valeur de paramètres de la séquence d'événements identifiée, une recherche est effectuée (étape 440) pour déterminer si la séquence d'événements identifiée correspond à un état préalablement identifié du cluster ou d'une partie du cluster. Cet état peut être mémorisé en association avec la séquence d'événements détectée dans la base de données 410. Une telle recherche permet de détecter rapidement, à partir d'une séquence d'événements identifiée, une situation déjà rencontrée.

La séquence d'événements identifiée et, le cas échéant, l'état cherché associé, peuvent alors être visualisés (étape 445). Une telle visualisation est avantageusement paramétrable. Il est ainsi possible, par exemple, de visualiser une ou plusieurs séquences d'événements identifiées en fonction des équipements dans lesquels les événements correspondants ont été détectés et de visualiser les séquences d'événements identifiées pour un équipement donné.

Durant cette étape de visualisation, il est possible d'assigner un état à une séquence d'événements identifiée. La mémorisation de cet état en lien avec une séquence d'événements (suggérée par la flèche en trait pointillé entre le bloc 445 et la base de données 410) permet, ultérieurement, de reconnaître cet état à partir d'une séquence d'événements similaire.

Il est observé ici que si l'algorithme représenté sur la figure 4 vise, pour des raisons de clarté, la détection d'une seule séquence d'événements (pouvant comprendre plusieurs séquences partielles d'événements), cet algorithme peut être aisément modifié pour permettre la détection de plusieurs séquences d'événements de façon parallèle.

Un dispositif adapté à mettre en œuvre l'algorithme décrit en référence à la figure 4 ou un algorithme similaire est, par exemple, un dispositif dont l'architecture est similaire à celle décrite en référence à la figure 2.

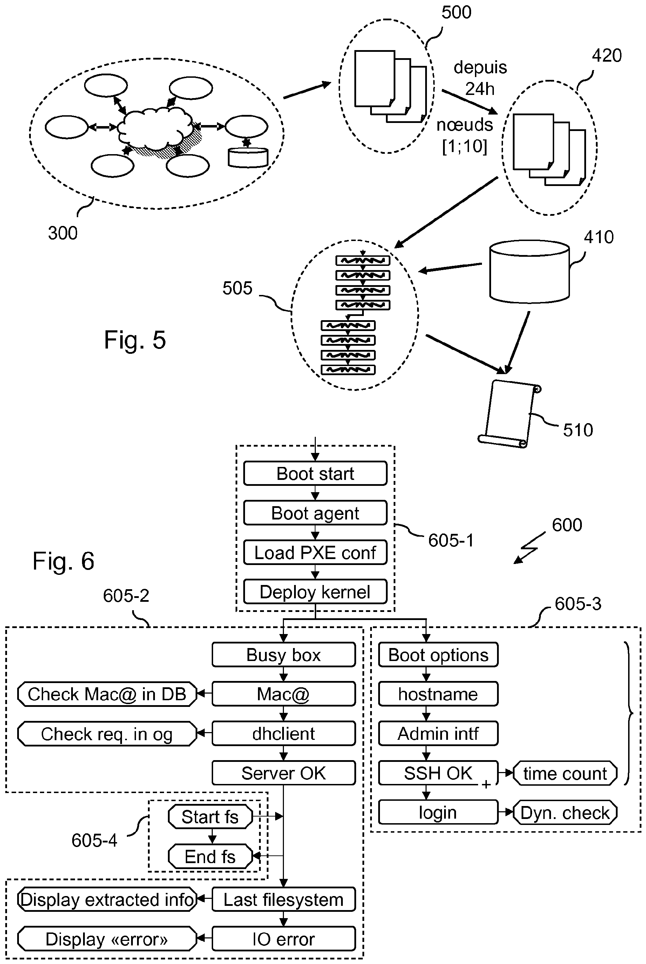

La figure 5 illustre schématiquement un principe d'analyse de données d'exécution selon l'invention. Lors du démarrage des équipements du cluster 300 et du déploiement d'une image logicielle dans ce dernier, des données d'exécution sont générées et mémorisées. Typiquement, les données d'exécution sont mémorisées de façon centralisée sous forme de fichiers 500, un fichier étant associé à chaque équipement du cluster.

Parmi les données d'exécution générées, certaines (référence 420) sont sélectionnées. A titre d'illustration, les critères de sélection peuvent être choisis de façon à sélectionner toutes les données d'exécution des nœuds dont les identifiants sont compris entre 1 et 10 et générées dans les dernières vingt quatre heures.

L'analyse des données d'exécution sélectionnées selon une séquence d'événements prédéterminée et des définitions d'événements, mémorisées ici dans la base de données 410, permet de détecter une séquence d'événements 505 ainsi que, le cas échéant, des valeurs de paramètres de cette séquence, par exemple une valeur d'adresse. A partir des événements détectés (ou, au contraire, attendus mais non détecté), il est possible de lancer des actions, par exemple des actions pour calculer un temps entre deux événements.

La séquence d'événements détectée ainsi que des connaissances prédéterminées, notamment des connaissances relatives à un état du cluster selon une séquence déterminée, permettent de générer un rapport 510 qui peut être affiché selon différents formats afin de permettre l'identification d'anomalies matérielles et/ou logicielles.

Comme décrit précédemment, des données de configuration comprenant notamment des définitions d'événements et de séquences d'événements à déterminer sont nécessaires à la mise en oeuvre de l'invention. De telles données de configuration peuvent être mémorisées dans une base de données, une table de configuration ou toute autre structure de données adaptée. Selon un mode de réalisation particulier, une table de configuration est utilisée pour définir des séquences d'événements, des configurations d'équipements et des événements.

Une séquence d'événements peut être définie par une indication de séquence, un nom et une liste d'événements et, le cas échéant, d'actions liés à des événements ou à l'absence d'événement. A titre d'illustration, le format simplifié suivant peut être utilisé : *SEQUENCE#DEFINE#nom_séquence#événement_1→action_1#événement_2 →action_2*#*...#événement_n→action_n*

Selon ce format, le caractère « # » est utilisé comme séparateur entre des arguments et le caractère « → » indique un lien de dépendance pour indiquer, par exemple, qu'une ou plusieurs actions doivent être effectuées si un événement est détecté. De façon similaire, le signe « ⇒ » peut être utilisé pour indiquer un lien de dépendance entre la détection d'un événement et la recherche d'une séquence partielle d'événements (la recherche de cette séquence partielle n'étant alors effectuée que si l'événement dont elle dépend est détecté).

Les indications « *SEQUENCE* » et « *DEFINE* » ont pour objet d'indiquer qu'il s'agit de la définition d'une séquence. « *événement_i* » désigne un identifiant d'un événement particulier et prédéterminé tandis que « *action_i »* désigne un identifiant d'une action également particulière et prédéterminée. Des caractères peuvent être associés aux identifiants figurant dans la définition d'une séquence pour leur conférer un sens particulier. Ainsi, à titre d'illustration, le caractère « + » peut être associé à un identifiant d'événement pour indiquer que la position de cet événement dans la séquence est sans importance. De même, une durée maximale (permettant la détection d'un événement) entre le début de la séquence considérée et l'apparition d'un événement de celle-ci peut être exprimée, par exemple en secondes, par une valeur entre parenthèses à côté de l'identifiant de l'événement concerné.

Un exemple d'une séquence est donné en annexe (Définition d'une séquence). Celui-ci vise une séquence utilisée par défaut (« *default* »). Elle vise les événements « *upMark* » et « *bootAgent* » auxquels aucune action n'est associée ainsi que les événements *« macaddr »* et « *login* » auxquels les actions « *count_dhcp* » et « *TimeToLogin* » sont associées, respectivement.

De façon simplifiée, l'événement « *upMark* » correspond à la détection de la mise sous tension de l'équipement considéré, l'événement « *bootAgent* » vise la détection du démarrage du module logiciel connu sous le nom de *boot agent* (chargé de récupérer les informations de boot) de l'équipement considéré, l'événement « *macaddr* » concerne la détection de l'interface réseau et l'obtention de son adresse MAC (acronyme de *Media Access Control* en terminologie anglo-saxonne) et l'événement « *login »* concerne la disponibilité de l'ouverture d'une session.

L'action « *count_dhcp* » a ici pour objet le comptage d'un motif comprenant une variable dans un fichier de données d'exécution du nœud d'administration considéré. Elle est notamment déclenchée lorsque l'événement *« macaddr »* est détecté. L'action « *TimeToLogin* » affiche le temps écoulé entre le début de la séquence (ici l'événement « *upMark* » de mise sous tension de l'équipement) et l'événement auquel elle est associée. Elle est notamment déclenchée lorsque l'événement « *login* » est déterminé, c'est-à-dire lorsqu'une demande d'ouverture de session est possible.

Bien entendu d'autres séquences peuvent être définies.

De façon avantageuse, les équipements mis en œuvre dans un cluster sont regroupés par configurations pour tenir compte de leurs spécificités et permettre de définir des événements selon des caractéristiques propres d'équipements. Il est ainsi possible, par exemple, d'associer des références de configuration à des modèles d'équipements selon le format suivant : *HWCONFIG#nom_configuration#MODEL#modèle*

A nouveau, selon ce format, le caractère « # » est utilisé comme séparateur entre des arguments. Les indications « *HWCONFIG* » et *« MODEL* » ont pour objet d'indiquer qu'il s'agit de la définition d'une configuration matérielle en fonction d'un modèle d'équipement. « *nom_configuration* » désigne le nom de la configuration tandis que « *modèle* » vise un modèle d'équipement devant être associé à la configuration associée.

Un exemple de configurations est donné en annexe (Définition de configurations). Selon cet exemple, le modèle connu sous la référence « M422e2 » correspond à une première configuration (HWCONFIG#conf1#MODEL#M422e2) tandis que le modèle connu sous la référence « M500 » correspond à une seconde configuration (HWCONFIG#conf2#MODEL#M500).

Des événements sont définis, par type de configuration, pour permettre l'identification d'événements dans des données d'exécution. En d'autres termes, un même événement est défini de différentes façons selon les systèmes dans lesquels il doit être identifié. Les événements sont ainsi appelés événements polymorphes en ce que leur forme change en fonction des systèmes dans lesquels ils apparaissent. Il est ainsi possible, par exemple, d'associer des noms d'événements à des définitions en fonction de configuration selon le format suivant : *EVENT#nom_événement#configuration#définition*

A nouveau, selon ce format, le caractère « # » est utilisé comme séparateur entre des arguments. L'indication « *EVENT* » a pour objet d'indiquer qu'il s'agit de la définition d'un événement appelé « *nom_événement* » pour un système lié à une configuration appelée « *configuration* ». L'expression « *définition* » est la définition de l'événement « *nom_événement* » pour la configuration « *configuration* ». La définition correspond typiquement à une chaîne de caractères définissant le motif (*pattern*) recherché.

Des signes particuliers peuvent être utilisés pour désigner, par exemple, n'importe quel symbole ou n'importe quelle chaîne de symboles ou pour désigner une variable. Ainsi, à titre d'illustration, le signe « * » désigne ici n'importe quelle chaîne de symboles ou de caractères. Toujours à titre d'exemple, une chaîne de caractères placée entre deux signes « % » représente ici un nom de variable. L'expression « *%ADMIN_MAC_ADRESSE%* » représente ainsi une adresse de type MAC de l'interface réseau d'administration du nœud visé. Une telle adresse ou plus généralement une valeur d'une telle variable peut être obtenue à partir des données d'exécution, notamment dans des données d'exécution propres au nœud ou à l'équipement courant, c'est-à-dire au nœud ou à l'équipement dont les données d'exécution sont analysées (le lien entre les données d'exécution et le nœud ou l'équipement pouvant être établi par le fichier contenant les données d'exécution et son nom). Ces valeurs peuvent être obtenues directement dans des données d'exécution ou dans des données de configuration à partir de données d'exécution. Il peut notamment s'agir de valeurs de variables associées à des nœuds cibles, connues et nécessaires pour la mise en œuvre du processus de déploiement.

Des exemples de définitions d'événements sont donnés en annexe (Définition d'événements polymorphes). Ainsi, par exemple, l'événement « *upMark* » est défini par la chaîne de caractères « *Phoe Trusted\(tm\) Server*|*AMBIOS\(C\)* » pour la configuration « *conf3* » *(EVENT#upMark#conf3#Phoe Trusted\(tm\) Server*|*AMBIOS\(C\)*) et par la chaîne de caractères « *PCI Platform Pre-Initialization* » pour la configuration « *conf1* » *(EVENT#upMark#conf1#PCI Platform Pre-Initialization*).

Par ailleurs, la table de configuration utilisée peut comprendre des définitions d'actions. Comme décrit précédemment, ces actions ont, par exemple, pour objet de vérifier la valeur d'une variable telle que la valeur d'une adresse IP (sigle d'*Internet Protocol* en terminologie anglo-saxonne), la présence ou l'absence d'un événement associé à un événement détecté ou non détecté ou vérifier un résultat d'exécution d'une commande. Il est ainsi possible, par exemple, d'associer un type et un nom d'action à des commandes selon le format suivant :
*CHECK#nom_actiont#type#définition*

A nouveau, selon ce format, le caractère « # » est utilisé comme séparateur entre des arguments. L'indication « *CHECK* » a pour objet de préciser le type de définition visée, ici une action. L'expression « *nom_action »* désigne le nom de l'action, l'expression « *type* » indique le type d'action, c'est-à-dire, par exemple, son effet ou sa sortie. A titre d'illustration, le résultat d'une action peut être affiché sur un écran (*DISPLAY*) pour être mémorisé comme donnée d'exécution ou générer une erreur (*ERROR*). L'expression « *définition* » contient la définition et les paramètres de l'action à effectuer.

Un exemple d'actions est donné en annexe (Définition d'actions). Les deux actions visées dans cet exemple sont celles visées dans la séquence d'événements décrite précédemment en référence avec l'annexe (Définition d'une séquence).

Comme décrit précédemment, un état connu du cluster ou d'une partie du cluster peut être associé à une séquence d'événements. A ces fins, le format suivant peut être utilisé : *WKCASE#nom_séq_associée#conf_concernées#déf_cas\message*

Le caractère « # » est à nouveau utilisé ici comme séparateur d'arguments. L'indication « *WKCASE* » a pour objet de préciser le type de définition visée, ici un état connu (*WellKnown CASE* en terminologie anglo-saxonne). L'expression « *nom_séq_associée* » désigne le nom de la séquence d'événements associée à l'état connu et l'expression « *conf_concernées* » indique les configurations pour lesquelles la séquence d'événements correspond à l'état connu. L'expression « *déf_cas* » contient la définition de l'état concerné par rapport à la séquence d'événements associée à l'état connu. Une telle définition peut, par exemple, indiquer quels sont les événements qui doivent être détectés (par exemple à l'aide du caractère « 1 »), quels sont les événements qui ne doivent pas être détectés (par exemple à l'aide du caractère « 0 ») et quels sont les événements pour lesquels une détection ou une absence de détection est indifférente vis-à-vis de l'état connu associé (par exemple à l'aide du caractère « . »). Une telle définition est avantageusement donnée selon l'ordre des événements de la séquence concernée. L'expression « message » indique le contenu du message correspondant à l'état connu, ce message pouvant notamment être affiché lorsque l'état correspondant est identifié.

Il est observé ici que plusieurs séquences différentes peuvent être associées à un même état connu.

Un exemple de définition d'un état connu est donné en annexe (Définition d'états). Il vise un problème de configuration réseau. Selon cet exemple, l'état connu est défini par rapport à la séquence d'événements connue sous le nom de « *default* » pour des équipements conformes à l'une des configurations *conf0* à *conf9.* Cet état connu est identifié lorsque les événements de la séquence d'événements sont conformes à la définition « *110.* », c'est-à-dire, selon la définition de la séquence d'événements « default » (Annexe, Définition d'une séquence) et le formalisme décrit précédemment, lorsque les événements *upMark* et *bootAgent* sont détectés (« *11* ») et que l'événement *macaddr* n'a pas été détecté (« *0* »), que l'événement *login* ait été détecté ou non (« . »). Lorsque cet état est détecté, le message « *Problème de configuration réseau* » est affiché.

La figure 6 représente schématiquement un exemple d'une séquence d'événements comprenant plusieurs séquences partielles d'événements ainsi que des commandes d'actions.

Comme illustré, la séquence d'événements 600 comprend ici quatre séquences partielles d'événements 605-1 à 605-4, certains événements étant associés à des actions. Les événements sont ici représentés par des rectangles tandis que les actions sont représentées par des octogones.

La détection de la séquence d'événements 600 comprend la détection de la séquence partielle 605-1 puis la détection de la séquence partielle 605-2 ou de la séquence partielle 605-3 et, le cas échéant, si la séquence partielle 605-2 a été identifiée, la détection de la séquence partielle 605-4.

La séquence partielle 605-1 comprend ici les événements « *Boot start* », « *Boot agent* », « *Load PXE conf »* et « *Deploy kernel* ».

Chaque séquence ou séquence partielle est indépendante des nœuds ou des équipements à l'origine des événements à détecter. En effet, comme décrit précédemment, ces événements peuvent être détectés dans différents types de nœuds cependant, la définition de ces événements varie d'un type de nœud à un autre.

Ainsi, pour détecter la séquence 600, une première phase consiste à détecter les événements « *Boot start* », « *Boot agent* », « *Load PXE conf* » et « *Deploy kernel* ». Lorsque ces événements ont été identifiés, une seconde phase consiste à détecter la séquence partielle 605-2 si l'événement « *Deploy kernel* » est détecté ou la séquence partielle 605-3 si l'événement « *Deploy kernel* » n'est pas détecté.

La séquence partielle 605-2 comprend ici les événements *« Busy box* », « *Mac@* »*,* « *dhclient* », *« Server OK* », « *Last filesystem* » et « *IO error ».*

Une action est associée avec l'événement « *Mac@* » afin de vérifier l'adresse MAC obtenue dans une base de données de configuration du cluster. De même, une action est associée à l'événement « *dhclient »* pour vérifier dans les données d'exécution qu'une requête correspondante a bien été reçue par un serveur dhcp si l'événement « *dhclient* » n'est pas identifié. Enfin, des actions d'affichage de données sont associées aux événements *« Last filesystem* » et « *IO error* » afin de fournir des informations à un opérateur et/ou signaler une erreur.

Lorsque les événements « *Busy box* », « *Mac@* », « *dhclient* » et « *Server OK* » de la séquence partielle 605-2 ont été identifiés, une troisième phase consiste à détecter la séquence partielle 605-4 à la demande d'un utilisateur. En effet, afin d'affiner une analyse, certaines séquences partielles d'événements peuvent être ajoutées aux autres lors de l'exécution via l'usage d'options au lancement de la recherche. Cette séquence partielle a pour objet d'identifier les événements « *Start fs* » et « *End fs ».* Une action (non représentée) est avantageusement effectuée pour compter le temps écoulé entre l'apparition de ces deux événements. Celui-ci peut notamment être affiché.

La séquence partielle 605-3 comprend ici les événements « *Boot options* », « *hostname* », « *Admin intf* », « *SSH OK* » et « *login* ». Comme indiqué par l'utilisation du symbole « + », la position de l'événement « *SSH OK* » dans la séquence partielle 605-3 est sans importance ici.

Une action est associée avec l'événement « SSH *OK* » afin de compter le temps écoulé entre le démarrage et l'apparition de l'événement « *SSH OK* ». Celui-ci peut notamment être affiché.

De même, une action est associée à l'événement « *login* » pour effectuer une vérification dynamique d'un nœud tel que le nœud d'administration ou le nœud courant (nœud dont les données d'exécution sont en cours d'analyse), une telle action étant, par exemple, une fonction connue sous le nom de « *ping ».*

Comme décrit précédemment, le procédé selon l'invention vise indifféremment l'analyse de données d'exécution a postériori que dynamiquement.

Naturellement, pour satisfaire des besoins spécifiques, une personne compétente dans le domaine de l'invention pourra appliquer des modifications dans la description précédente. En particulier, bien que l'invention ait été essentiellement décrite en référence à des nœuds de cluster en charge de traitement de données, l'invention peut être mise en œuvre avec tous types de nœuds et d'équipements, c'est-à-dire avec tous types d'unité de calcul et/ou de traitement d'un cluster telles que des nœuds de traitement de données, des nœuds d'administration et de gestion, des nœuds de stockage, des nœuds de commutation, des nœuds de routage et similaires.

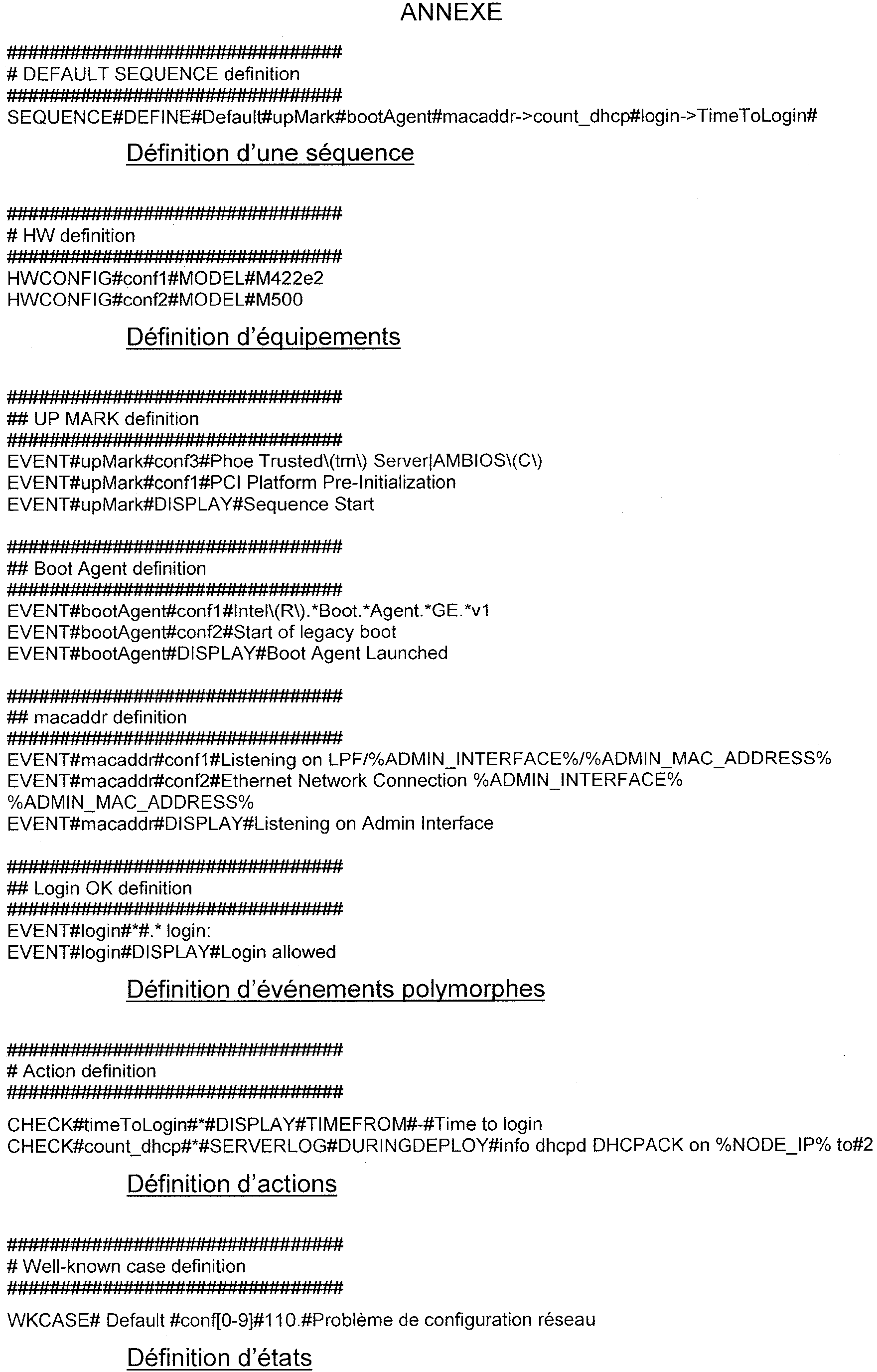

## Revendications

1. Procédé pour ordinateur d'aide au déploiement de clusters dans un cluster comprenant une pluralité de nœuds, au moins un nœud de la pluralité de nœuds comprenant des moyens pour générer des données d'exécution de démarrage dudit au moins un nœud, ce procédé comprenant les étapes suivantes,
- obtention (400) de données d'exécution de démarrage dudit au moins un nœud ;
- obtention (405) d'une définition d'au moins une séquence d'événements, ladite séquence d'événements comprenant au moins un événement et caractérisant un état donné d'au moins une partie dudit cluster ;
- obtention d'au moins une définition dudit au moins un événement de ladite au moins une séquence d'événements, ladite au moins une définition dudit au moins un événement caractérisant ledit au moins un événement de ladite au moins une séquence d'événements pour ledit au moins un nœud ;
- analyse (415, 430) desdites données obtenues d'exécution de démarrage dudit au moins un nœud selon ladite au moins une définition dudit au moins un événement de ladite au moins une séquence d'événements ; et,
- transmission (445) d'au moins une information relative à ladite au moins une séquence d'événements si lesdites données obtenues d'exécution de démarrage dudit au moins un nœud comprennent des données correspondant à ladite au moins une définition dudit au moins un événement de ladite au moins une séquence d'événements ;
le procédé étant **caractérisé en ce que** plusieurs définitions distinctes d'un même événement sont obtenues pour rechercher un même événement dans des données d'exécution de démarrage d'au moins deux nœuds de type différent.

2. Procédé selon la revendication 1 comprenant en outre une étape d'identification et de lancement (425) d'une action associée à un événement de ladite au moins une séquence d'événements, ladite action étant lancée en réponse à une étape d'analyse desdites données obtenues d'exécution de démarrage dudit au moins un nœud selon au moins une définition dudit événement auquel est associé ladite action, ledit événement auquel est associé ladite action étant défini pour au moins ledit au moins un nœud.

3. Procédé selon la revendication 1 ou la revendication 2 selon lequel ladite au moins une définition dudit au moins un événement de ladite au moins une séquence d'événements caractérisant ledit au moins un événement de ladite au moins une séquence d'événements pour ledit au moins un nœud comprend une variable.

4. Procédé selon l'une quelconque des revendications précédentes comprenant en outre une étape de détermination (440) d'un état associé à ladite au moins une séquence d'événements, ladite au moins une information transmise relative à ladite au moins une séquence d'événements comprenant ledit état.

5. Procédé selon l'une quelconque des revendications précédentes selon lequel ladite au moins une séquence d'événements comprend une pluralité de séquences partielles d'événements, des événements d'au moins une séquence partielle d'événements, appelée seconde séquence partielle d'événements, étant recherchés si des événements d'au moins une première séquence partielle ont été identifiés dans lesdites données d'exécution (435).

6. Procédé selon l'une quelconque des revendications précédentes comprenant en outre une étape de détermination d'au moins une caractéristique d'au moins un événement de ladite au moins une séquence d'événements, ladite au moins une caractéristique étant une condition d'identification de l'événement auquel elle se rapporte.

7. Procédé selon la revendication 6 selon lequel ladite caractéristique est une caractéristique d'ordre ou une caractéristique temporelle liée à au moins un événement distinct de l'événement auquel ladite au moins une caractéristique se rapporte.

8. Procédé selon l'une quelconque des revendications précédentes selon lequel lesdites données obtenues d'exécution de démarrage dudit au moins un nœud sont obtenues auprès de moyens de stockage indépendants dudit au moins un nœud.

9. Procédé selon l'une quelconque des revendications précédentes selon lequel une définition d'un événement consiste en un motif formé d'une suite de symboles.

10. Procédé selon l'une quelconque des revendications précédentes selon lequel ladite étape de transmission d'au moins une information relative à ladite au moins une séquence d'événements comprend une étape d'affichage d'au moins une partie de ladite au moins une séquence d'événements.

11. Procédé selon l'une quelconque des revendications précédentes comprenant en outre une étape de sélection de données d'exécution parmi lesdites données obtenues d'exécution de démarrage dudit au moins un nœud, ladite étape d'analyse étant effectuée sur lesdites données d'exécution sélectionnées.

12. Programme d'ordinateur comprenant des instructions adaptées à la mise en œuvre de chacune des étapes du procédé selon l'une quelconque des revendications précédentes lorsque ledit programme est exécuté sur un ordinateur.

13. Dispositif comprenant des moyens adaptés à la mise en œuvre de chacune des étapes du procédé selon l'une quelconque des revendications 1 à 11.

## Patentansprüche

1. Computerverfahren zur Unterstützung des Einsatzes von Clustern in einem Cluster, der eine Vielzahl von Knoten umfasst, wobei mindestens ein Knoten der Vielzahl von Knoten Mittel zur Erzeugung von Startausführungsdaten von dem mindestens einen Knoten umfasst, wobei dieses Verfahren die folgenden Schritte umfasst:
- Erhalten (400) von Startausführungsdaten von dem mindestens einen Knoten;
- Erhalten (405) einer Definition von mindestens einer Folge von Ereignissen, wobei die Folge von Ereignissen mindestens ein Ereignis umfasst und einen gegebenen Zustand von mindestens einem Teil des Clusters charakterisiert;
- Erhalten von mindestens einer Definition des mindestens einen Ereignisses der mindestens einen Folge von Ereignissen, wobei die mindestens eine Definition des mindestens einen Ereignisses das mindestens eine Ereignis der mindestens einen Folge von Ereignissen für den mindestens einen Knoten charakterisiert;
- Analysieren (415, 430) der erhaltenen Startausführungsdaten von dem mindestens einen Knoten gemäß der mindestens einen Definition des mindestens einen Ereignisses der mindestens einen Folge von Ereignissen; und,
- Übertragen (445) mindestens einer Information bezüglich der mindestens einen Folge von Ereignissen, wenn die erhaltenen Startausführungsdaten von dem mindestens einen Knoten Daten enthalten, die der mindestens einen Definition des mindestens einen Ereignisses der mindestens einen Folge von Ereignissen entsprechen; wobei das Verfahren **dadurch gekennzeichnet ist, dass** mehrere unterschiedliche Definitionen eines gleichen Ereignisses erhalten werden, um nach einem gleichen Ereignis in Startausführungsdaten von mindestens zwei Knoten unterschiedlichen Typs zu suchen.

2. Verfahren nach Anspruch 1, ferner umfassend einen Schritt des Identifizierens und Initiierens (425) einer Aktion, die mit einem Ereignis der mindestens einen Folge von Ereignissen verknüpft ist, wobei die Aktion als Reaktion auf einen Schritt des Analysierens der Daten initiiert wird, die aus dem Starten der Ausführung des mindestens einen Knotens gemäß mindestens einer Definition des Ereignisses, mit dem die Aktion verknüpft ist, erhalten werden, wobei das Ereignis, mit dem die Aktion verknüpft ist, für mindestens den mindestens einen Knoten definiert wird.

3. Verfahren nach Anspruch 1 oder Anspruch 2, wobei die mindestens eine Definition des mindestens einen Ereignisses der mindestens einen Folge von Ereignissen, die das mindestens eine Ereignis der mindestens einen Folge von Ereignissen für den mindestens einen Knoten charakterisiert, eine Variable umfasst.

4. Verfahren nach einem der vorstehenden Ansprüche, ferner umfassend einen Schritt des Bestimmens (440) eines Zustands, der mit der mindestens einen Folge von Ereignissen verbunden ist, wobei die mindestens eine übertragene Information bezüglich der mindestens einen Folge von Ereignissen den Zustand umfasst.

5. Verfahren nach einem der vorstehenden Ansprüche, wobei die mindestens eine Folge von Ereignissen eine Vielzahl von Teilfolgen von Ereignissen umfasst, wobei nach Ereignissen mindestens einer Teilfolge von Ereignissen, die als zweite Teilfolge von Ereignissen bezeichnet wird, gesucht wird, wenn Ereignisse mindestens einer ersten Teilfolge in den Ausführungsdaten (435) identifiziert worden sind.

6. Verfahren nach einem der vorstehenden Ansprüche, ferner umfassend einen Schritt des Bestimmens mindestens eines Merkmals mindestens eines Ereignisses der mindestens einen Folge von Ereignissen, wobei das mindestens eine Merkmal eine Identifizierungsbedingung des Ereignisses ist, auf das es sich bezieht.

7. Verfahren nach Anspruch 6, wobei das Merkmal ein Ordnungsmerkmal oder ein zeitliches Merkmal ist, das sich auf mindestens ein Ereignis bezieht, das sich von dem Ereignis unterscheidet, auf das sich das mindestens eine Merkmal bezieht.

8. Verfahren nach einem der vorstehenden Ansprüche, wobei die erhaltenen Startausführungsdaten von dem mindestens einen Knoten von Speichermitteln unabhängig von dem mindestens einen Knoten erhalten werden.

9. Verfahren nach einem der vorstehenden Ansprüche, wobei eine Definition eines Ereignisses aus einem Muster besteht, das durch eine Folge von Symbolen gebildet wird.

10. Verfahren nach einem der vorstehenden Ansprüche, wobei der Schritt des Übertragens mindestens einer Information bezüglich der mindestens einen Folge von Ereignissen einen Schritt des Anzeigens mindestens eines Teils der mindestens einen Folge von Ereignissen umfasst.

11. Verfahren nach einem der vorstehenden Ansprüche, ferner umfassend einen Schritt der Auswahl von Ausführungsdaten aus den erhaltenen Startausführungsdaten von dem mindestens einen Knoten, wobei der Schritt des Analysierens an den ausgewählten Ausführungsdaten durchgeführt wird.

12. Computerprogramm, das Anweisungen umfasst, die angepasst sind, um jeden der Schritte des Verfahrens nach einem der vorstehenden Ansprüche zu implementieren, wenn das Programm auf einem Computer ausgeführt wird.

13. Vorrichtung, die Mittel umfasst, die angepasst sind, um jeden der Schritte des Verfahrens nach einem der Ansprüche 1 bis 11 zu implementieren.

## Claims

1. Computer method for aiding deployment of clusters in a cluster comprising a plurality of nodes, at least one node of the plurality of nodes comprising means for generating start-up execution data for said at least one node, this method comprising the following steps,
- obtaining (400) start-up execution data for said at least one node;
- obtaining (405) a definition of at least one sequence of events, said sequence of events comprising at least one event and characterising a given state of at least a part of said cluster;
- obtaining at least one definition of said at least one event of said at least one sequence of events, said at least one definition of said at least one event characterising said at least
one event of said at least one sequence of events for said at lease one node;
- analysing (415, 430) said start-up execution data obtained for said at least one node according to said at least one definition of said at least one event of said at least one sequence of events; and
- transmitting (445) at least one item of information relating to said at least one sequence of events if said start-up execution data obtained for said at least one node comprise data corresponding to said at least one definition of said at least one event of said at least one sequence of events;
the method being **characterised in that** several distinct definitions of the same event are obtained in order to search for a same event in start-up execution data for at least two nodes of different types.

2. Method according to claim 1, further comprising a step of identifying and starting (425) an action associated with an event of said at least one sequence of events, said action being started in response to a step of analysing said start-up execution data obtained for said at least one node according to at least one definition of said event with which said action is associated, said event with which said action is associated being defined for at least said at least one node.

3. Method according to claim 1 or claim 2, wherein said at least one definition of said at least one event of said at least one sequence of events characterising said at least one event of said at least one sequence of events for said at least one node comprises a variable.

4. Method according to any one of the preceding claims, further comprising a step of determining (440) a state associated with said at least one sequence of events, said at least one item of information transmitted relating to said at least one sequence of events comprising said state.

5. Method according to any one of the preceding claims, wherein said at least one sequence of events comprises a plurality of partial sequences of events, events from at least one partial sequence of events, referred to as second partial sequence of events, being sought if events from at least one first partial sequence have been identified in said execution data (435).

6. Method according to any one of the preceding claims, further comprising a step of determining at least one characteristic of at least one event of said at least one sequence of events, said at least one characteristic being a condition for identifying the event to which it relates.

7. Method according to claim 6, wherein said characteristic is an order characteristic or a temporal characteristic linked to at least one event distinct from the event to which said at least one characteristic relates.

8. Method according to any one of the preceding claims, wherein said start-up execution data obtained for said at least one node are obtained from storage means which are independent of said at least one node.

9. Method according to any one of the preceding claims, wherein a definition of an event consists of a pattern formed from a sequence of symbols.

10. Method according to any one of the preceding claims, wherein said step of transmitting at least one item of information relating to said at least one sequence of events comprises a step of displaying at least part of said at least one sequence of events.

11. Method according to any one of the preceding claims, further comprising a step of selecting execution data from said start-up execution data obtained for said at least one node, said analysis step being carried out on said selected execution data.

12. Computer program comprising instructions suitable for implementing each of the steps of the method according to any one of the preceding claims when said program is executed on a computer.

13. Device comprising means suitable for implementing each of the steps of the method according to any one of claims 1 to 11.
